# DEMANDE DE BREVET EUROPEEN

(11) **EP 1 757 374 A1**
(43) Date de publication de la demande: **28.02.2007**
(21) Numéro de dépôt: 06118503.9
(22) Date de dépôt: 07.08.2006
(51) Int. Cl.: B07C 7/00

(54) **Chariot à roulettes pour la fusion de lettres et d'objets de grand format pour préparer une tournée unique du facteur**

(30) Priorité: 26.08.2005 FR 0552568
(71) Demandeur: Solystic, 94257 Gentilly Cedex (FR)
(72) Inventeur: De Sousa, Olivier, 26240 Saint Uze (FR); Cornillon, Denis, 26400 Allex (FR); Tresse, Didier, 26350 Saint Laurent d'Onay (FR); Gutter, David, 26300 Rochefort Samson (FR)
(74) Mandataire: Prugneau, Philippe

(57) **Abrégé**

Un chariot (1) à roulettes pour fusionner des lettres et des objets de grand format comporte un plateau supérieur (3) rectangulaire agencé sur un châssis (2) à roulettes (5) s'étendant selon une certaine direction longitudinale de manière à coulisser transversalement à la direction longitudinale par rapport au châssis. Ce plateau supérieur comporte au moins une rallonge (6a,6b) agencée de manière à se déployer selon la direction longitudinale (7a,7b) dans le prolongement du plateau supérieur, deux rebords latéraux (8a,8b) à chacune des extrémités latérales du plateau supérieur faisant saillies sur le dessus du plateau supérieur et une palette (10) de maintien s'étendant parallèlement aux rebords latéraux agencée pour se déplacer selon la direction longitudinale sur le plateau supérieur.

## Description

L'invention concerne un chariot à roulettes pour fusionner des lettres avec des objets postaux de grand format et/ou des objets postaux dits non mécanisables.

La préparation d'une tournée du facteur avec des lettres et des objets de grand format, par exemple des journaux ou des magazines, et des objets plats non mécanisables, par exemple certaines lettres qui ne peuvent pas être triées en machine, fusionnés avec les lettres consiste à ordonner les lettres et les objets non mécanisables selon l'ordre des points de distribution de la tournée du facteur pour permettre au facteur d'effectuer une distribution avec une unique sacoche.

Pour préparer une tournée unique du facteur contenant à la fois des lettres et des objets de grand format, on peut procéder de la manière suivante. On prépare d'abord une tournée du facteur avec les lettres uniquement sur une première machine de tri. Puis on prépare sur une seconde machine de tri la même tournée du facteur avec les objets de grand format uniquement. Les objets de grand format peuvent par ailleurs être triés manuellement et des objets non mécanisables peuvent subir le même traitement. On fusionne ensuite manuellement les deux tournées pour en faire une seule. Pour cela, on transfère les objets de grand format triés dans les sorties de tri de la seconde machine dans des bacs que l'on transporte jusqu'à un ensemble de casiers de tri et on répartit les objets de grand format dans les casiers de tri, chaque casier de tri correspondant à une section de la tournée du facteur. On transfère ensuite également les lettres triées dans les sorties de tri de la première machine dans des bacs que l'on transporte jusqu'à l'ensemble de casiers de tri et on répartit les lettres dans les casiers de tri en respectant une correspondance entre les points de distribution des lettres et des objets de grand format placés dans chaque casier de tri. On ordonne alors dans chaque casier de tri les lettres, et les objets de grand format en fonction de leurs points de distribution. Un opérateur doit prendre les lettres et les objets de grand format pour les transférer des sorties de tri aux bacs et des bacs aux casiers de tri, ce qui n'est pas une opération aisée lorsque l'on désire maintenir ces envois postaux sur chant et selon un ordre déterminé dans les bacs, du fait que deux mains sont nécessaires pour maintenir la pile des envois postaux et que les envois non maintenus ont alors tendance à s'affaisser dans les bacs. Par ailleurs, lorsque l'opérateur attrape un paquet d'envois postaux, certains envois postaux peuvent malencontreusement glisser de ses mains. Le reclassement correct de ces envois nécessite alors un temps non négligeable. Le transport des bacs de lettres jusqu'aux casiers de tri est également une opération laborieuse compte tenu du poids des bacs à plein. La préparation de cette tournée unique du facteur requiert donc actuellement beaucoup de manipulations qui augmentent le coût associé à la distribution qui représente actuellement environ les deux tiers du coût total de traitement d'un envoi postal.

Le but de l'invention est donc de proposer un dispositif simple pour faciliter la préparation d'une tournée du facteur avec des lettres et des objets de grand format et/ou des objets non mécanisables fusionnés avec les lettres.

A cet effet, l'invention a pour objet un chariot à roulettes pour fusionner des lettres et des objets plats de grand format, caractérisé en ce qu'il comporte un plateau supérieur rectangulaire agencé sur un châssis à roulettes s'étendant selon une certaine direction longitudinale de manière à coulisser transversalement à la direction longitudinale par rapport au châssis, le plateau supérieur comportant au moins une rallonge agencée de manière à se déployer selon la direction longitudinale dans le prolongement du plateau supérieur, deux rebords latéraux à chacune des extrémités latérales du plateau supérieur faisant saillies sur le dessus du plateau supérieur et une palette de maintien s'étendant parallèlement aux rebords latéraux agencée pour se déplacer selon la direction longitudinale sur le plateau supérieur.

En utilisant le chariot selon l'invention, il n'est plus nécessaire de soulever les lettres pour les sortir de la machine de tri, il suffit de les faire glisser jusque sur le plateau supérieur. Les envois postaux sont maintenus en permanence sur chant par la palette de maintien et ne s'affaissent pas lorsque l'opérateur les lâche. L'utilisation d'un chariot à roulettes évite à l'opérateur de porter des bacs pleins de lettres pour les amener vers le lieu de la fusion des lettres et des objets de grand format. Du fait que le chariot comporte des rallonges qui augmentent à dessein la longueur de la table, le chariot est suffisamment long pour permettre l'insertion des objets de grand format entre les lettres directement sur le chariot. Cela permet d'éviter avantageusement une manipulation des lettres pour les introduire dans des casiers de tri.

La tournée du facteur avec les lettres peut être fractionnée en groupes de lettres au moyen d'intercalaires introduits lors du tri en machine afin de faciliter l'insertion des objets de grand format entre ces lettres, par exemple avec l'assistance d'un système de reconnaissance vocale d'adresse permettant de repérer respectivement les groupes de lettres dans lesquels doivent être insérés les objets de grand format.

Le chariot selon l'invention présente en outre les particularités suivantes :
- le plateau supérieur comporte deux rallonges se déployant selon la direction longitudinale dans des directions opposées ;
- la palette de maintien subit une force de rappel tendant à la déplacer selon la direction longitudinale en direction d'un des rebords latéraux ;
- le plateau supérieur comporte en outre un rebord longitudinal faisant saillie sur le dessus du plateau supérieur;
- des poignées sont agencées sur le rebord longitudinal ;
- le châssis à roulettes comprend en outre une poignée au niveau de chaque extrémité latérale.

L'invention s'étend également à un procédé pour fusionner des lettres et des objets de grand format avec un chariot à roulettes tel que défini ci-dessus dans lequel on trie les lettres dans des sorties de tri d'une machine de tri et on insère les objets plats de grand format entre les lettres, caractérisé en ce qu'il comprend les étapes consistant à :
- amener le chariot roulant en face d'une sortie de tri de la machine,
- faire coulisser le plateau supérieur du chariot contre la sortie de tri,
- faire glisser les lettres contenues sur chant dans cette sortie de tri jusque sur le plateau supérieur,
- déplacer le chariot le long des sorties de tri de la machine et vider une à une toutes les sorties de tri sur le plateau supérieur,
- rétracter le plateau supérieur sur le châssis du chariot roulant,
- amener le chariot roulant jusqu'à un endroit approprié pour l'insertion des objets de grand format,
- insérer les objets de grand format entre les lettres,
- écarter les rallonges du plateau supérieur pour laisser suffisamment de place pour l'insertion des objets de grand format entre les lettres.

L'invention sera mieux comprise à la lecture de la description qui suit et à l'examen des figures qui l'accompagnent. Cette description n'est donnée qu'à titre d'exemple indicatif et nullement limitatif de l'invention.
La figure 1 est une vue en perspective du chariot selon l'invention.
La figure 2 est une vue en perspective du chariot selon l'invention en position pour recevoir les lettres triées dans les sorties de tri de la machine de tri.
La figure 3 est un synoptique illustrant les étapes mises en oeuvre dans le procédé selon l'invention.

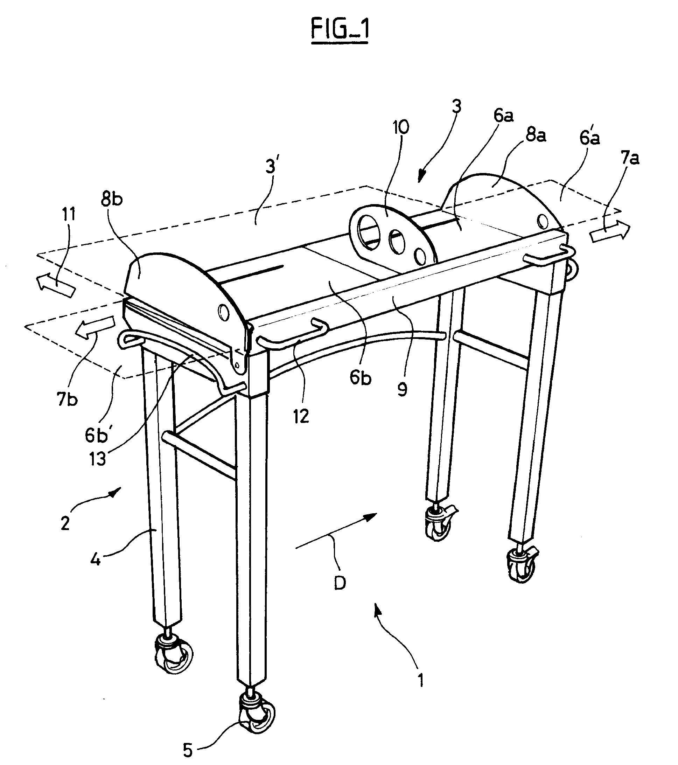

Sur la figure 1, on a représenté un chariot 1 selon l'invention. Ce chariot 1 se présente sous la forme d'une table rectangulaire s'étendant selon une certaine direction longitudinale notée D sur la figure 1 avec un châssis 2 à quatre pieds 4 montés chacun sur roulettes 5 et un plateau supérieur 3 rectangulaire monté sur le châssis 2. Le plateau supérieur 3 comporte deux rallonges 6a,6b pouvant être tirées de chaque coté du plateau supérieur 3 au delà du châssis 2 selon respectivement les directions longitudinales opposées représentées par les flèches 7a,7b pour allonger le plateau supérieur comme cela est montré par les lignes en pointillées 6a',6b'. Le plateau supérieur 3 comporte en outre deux rebords latéraux 8a,8b et un rebord longitudinal 9 s'étendant au dessus de la surface plane du plateau supérieur et servant de butées pour les envois postaux placés sur le plateau supérieur. Le plateau supérieur 3 est légèrement incliné vers le bas en direction du rebord longitudinal 9 afin d'assurer le maintien des lettres contre le rebord longitudinal 9 lors du déplacement du chariot. Les rebords latéraux 8a,8b sont solidaires des rallonges 8a,8b de sorte qu'ils bordent en permanence les extrémités longitudinales du plateau supérieur 3, quelque soit la position des rallonges 6a,6b. Comme visible sur la figure 1, les rebords longitudinaux ont des arêtes supérieures arrondies et sont perforés. Une palette 10 de maintien des envois postaux s'étendant perpendiculairement au rebord longitudinal 9 coulisse le long du bord longitudinal 9. Cette palette 10 de maintien des envois postaux coulisse par exemple le long d'un rail disposé dans le rebord longitudinal 9 et subit une force de rappel tendant à la déplacer selon la direction longitudinale D en direction d'un des rebords latéraux 8a,8b, permettant de maintenir les envois postaux sur chant entre cette palette et le rebord latéral. Cette force de rappel est exercée par un moyen élastique ou à ressort. Comme visible sur la figure 1, la palette 10 a une forme sensiblement ovoïde et comporte trois perforations. Le plateau supérieur 3 est agencé de manière à pouvoir coulisser dans son ensemble au delà du châssis 2 selon la direction latérale représentée par la flèche 11 pour se positionner à l'emplacement représenté par les lignes pointillées 3', c'est à dire à coulisser d'une position normale à une position décalée par rapport au châssis 2 fixe. Le plateau 3 coulisse du coté opposé au rebord longitudinal 9. Le plateau supérieur 3 coulisse par exemple sur des rails logés dans le châssis 2. Des poignées 12 orientées vers l'extérieur du plateau sont agencées sur le plateau supérieur 3, par exemple une poignée au niveau de chacune des extrémités latérales du rebord longitudinal 9, de manière à pouvoir déplacer aisément transversalement à la direction longitudinale D le plateau supérieur 3 par rapport au châssis 2. Par ailleurs, une poignée 13 est agencée à chaque extrémité latérale du chariot sur le châssis 2 pour faciliter la prise en main et le déplacement du chariot roulant.

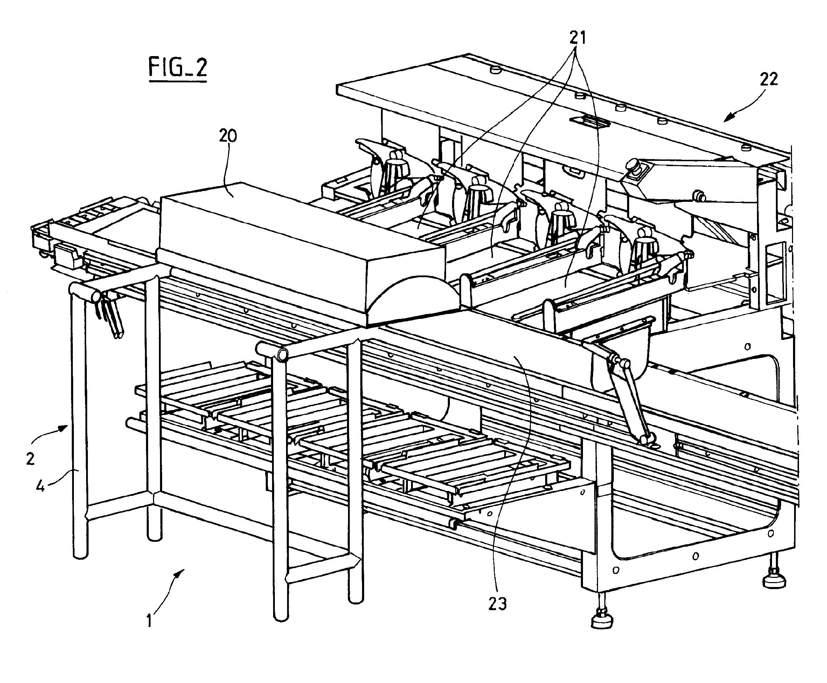

On a représenté sur la figure 2 le chariot selon l'invention avec le plateau supérieur en position décalée par rapport au châssis, pour recevoir des lettres 20 triées dans des sorties de tri 21 d'une machine de tri 22. L'invention est destinée plus particulièrement à la préparation de tournées de facteur dans laquelle le tri des lettres est réalisé dans une machine de tri avec des sorties de tri à tasseur dans lesquelles les lettres sont maintenues sur chant au moyen d'un tasseur. Dans une telle machine de tri, telle que la machine « Mars » de la société « Solystic », un convoyeur d'alimentation 23 en lettres de la machine s'étend devant les sorties de tri 21, afin de pouvoir réintroduire facilement pour une nouvelle passe de tri les lettres pré-triées dans les sorties de tri. Le plateau supérieur 3 et le châssis 2 du chariot 1 sont conçus de manière à ce que le plateau supérieur 3 passe juste au dessus du convoyeur d'alimentation 23 lorsqu'il est poussé en position décalée. Le bord longitudinal sans rebord du plateau supérieur vient affleurer les sorties de tri 21. L'opérateur n'a qu'à faire glisser les lettres 20 disposées dans les sorties de tri 21 jusque sur le plateau supérieur 3 pour vider les sorties de tri de la machine à la fin du processus de tri des lettres. On voit sur la figure 2 que le châssis 2 du chariot 1 n'est pas fermé du coté opposé à la machine de tri, c'est à dire que les deux pieds 4 les plus éloignés de la machine de tri ne sont pas reliés directement, de sorte que l'opérateur peut passer à l'intérieur du châssis du chariot et ainsi se rapprocher des sorties de tri pour une manipulation commode des lettres. L'opérateur peut ramener le plateau supérieur au dessus du châssis en tirant sur les poignées 11.

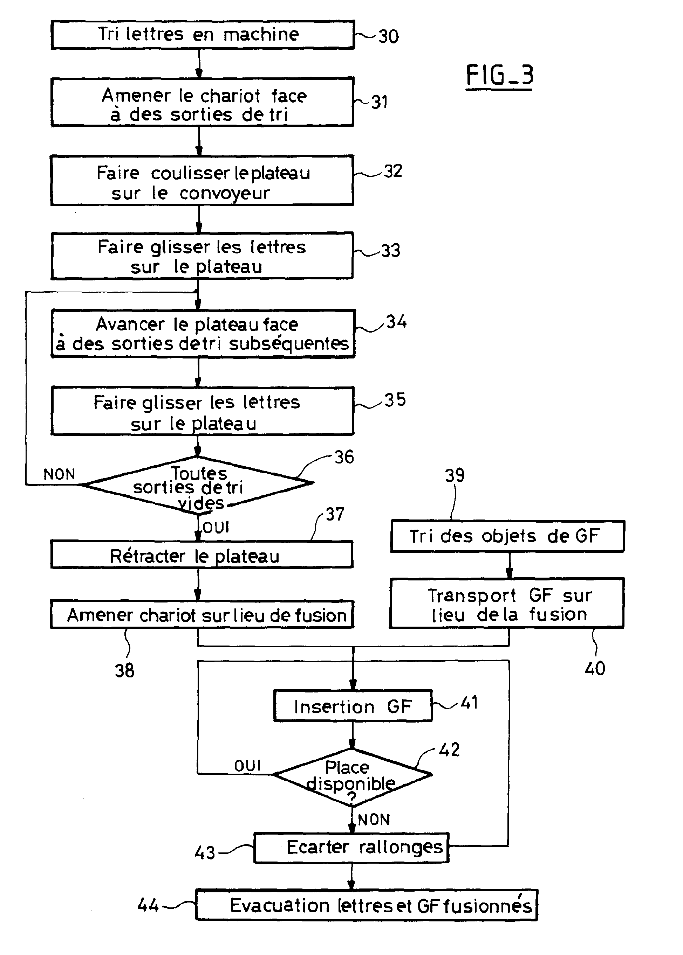

On a représenté sous forme d'organigramme sur la figure 3 les différentes étapes de la préparation d'une tournée du facteur avec des lettres et des objets de grand format en utilisant le chariot 1 selon l'invention.

L'opérateur trie d'abord à l'étape 30 toutes les lettres 20 dans une machine de tri 1, plus particulièrement en deux passes de tri dans une machine de tri avec des sorties de tri 21 à tasseur. A la fin de ce processus de tri en machine, les lettres sont ordonnées dans les sorties de tri par points de distribution consécutifs dans des sorties de tri consécutives le long de la machine de tri.

L'opérateur amène à l'étape 31 le chariot 1 devant la machine de tri 22, face à des sorties de tri 21, avec le bord longitudinal sans rebord du plateau supérieur contre la machine de tri. L'opérateur fait ensuite coulisser à l'étape 32 le plateau supérieur 3 au dessus du convoyeur d'alimentation 23. Le plateau supérieur 3 se trouve alors contre les sorties de tri 21 de la machine comme montré sur la figure 2 et l'opérateur peut se placer à l'intérieur du châssis 2 du chariot 1. A l'étape 33, il dégage les lettres du tasseur d'une sortie de tri 21 et fait glisser les lettres sur le plateau supérieur. Le rebord longitudinal 9 sert de butée pour disposer correctement les lettres et éviter qu'elles ne tombent du chariot. L'opérateur bloque les lettres sur le plateau supérieur entre la palette de maintien et un bord longitudinal 8a,8b du plateau supérieur afin de maintenir les lettres sur chant sans qu'elles s'affaissent. II a alors les mains complètement libres pour effectuer d'autres opérations. L'opérateur répète cette opération de transfert des lettres des sorties de tri jusque sur le plateau supérieur pour toutes les sorties qui se trouvent en face du plateau supérieur, en respectant l'ordre des sorties de tri. Il avance ensuite à l'étape 34 le chariot 1 face à des sorties de tri subséquentes et fait glisser à l'étape 35 les lettres contenues dans ces sorties sur le plateau supérieur 3. L'opérateur répète ces étapes 34 et 35 jusqu'à ce que toutes les sorties de tri correspondantes à une tourné du facteur soient vides (étape 36) et que toutes les lettres 21 soient sur le plateau supérieur 3. L'opérateur rétracte alors à l'étape 37 le plateau supérieur 3 sur le châssis 2 en tirant sur les poignées 12. Il déplace ensuite le chariot 1 jusque sur le lieu de la fusion des lettres et des objets de grand format (étape 38).

Parallèlement au tri des lettres, on trie à l'étape 39 des objets de grand format, en machine ou manuellement et on transporte (étape 40) ces objets de grand format jusque sur le lieu de la fusion des lettres et des objets de grand format, par exemple en utilisant un chariot. Les objets de grand format peuvent n'être que prétriés en une passe de tri.

L'opérateur attrape alors un objet de grand format, lit l'adresse de destination de cet objet de grand format et insère ce dernier à l'étape 41 dans l'ensemble de lettres disposé sur le plateau supérieur 3 à l'endroit approprié selon l'ordre de la tournée du facteur. Les envois postaux, lettres et objets de grand format, sont maintenus sur chant grâce à la pression exercée par la palette de maintien 10. L'opérateur continue l'insertion successive des objets de grand format entre les lettres jusqu'à ce qu'il n'y ait plus de place sur le plateau supérieur 3 pour recevoir d'autres objets de grand format (étape 42). Lorsqu'il n'y a plus de place sur le plateau supérieur 3 (étape 42) l'opérateur tire (étape 43) les rallonges 6a,6b pour allonger la table et permettre l'insertion d'autres objets de grand format qui recommence alors. Un rappel élastique vers le centre du plateau supérieur peut avantageusement être exercé sur les rallonges de manière à ce que les envois postaux soient maintenus fermement en permanence entre les deux rebords latéraux 8a,8b.

Lorsque la fusion des lettres et des objets de grand format est terminée, le facteur transfert (étape 44) les envois fusionnés du plateau supérieur 3 jusque dans sa sacoche en les faisant glisser, en respectant l'ordre des envois de la pile formée sur le chariot.

La fusion de la tournée du facteur avec les lettres et de la tournée du facteur avec les objets de grand format en une unique tournée du facteur est donc réalisée simplement sur ce chariot, réduisant le nombre de manipulations des envois postaux et la durée de la préparation de la tournée du facteur. L'allongement du plateau supérieur permet à ce plateau supérieur de recevoir le volume important des objets de grand format tout en ayant une taille appropriée pour le transfert des lettres, leur maintien sur chant et le déplacement du chariot. Ce chariot à roulettes ergonomique facilite grandement la tache de l'opérateur.

Un dispositif d'assistance au tri manuel peut être utilisé pour faciliter l'insertion des objets de grand format entre les lettres. La tournée du facteur avec les lettres est par exemple fractionnée en groupes séparés au moyen d'intercalaires introduits lors du tri des lettres et un système de reconnaissance vocale d'adresse permet d'indiquer à l'opérateur le groupe dans lequel un objet de grand format doit être inséré, ce groupe étant facilement repérable grâce aux intercalaires. Le chariot selon l'invention peut tout particulièrement être utilisé pour mettre en oeuvre le procédé décrit dans la demande de brevet français N°05 51 726 dans lequel la tournée du facteur avec les lettres est fractionnée en groupes séparés au moyen d'intercalaires pour faciliter l'insertion des objets de grand format entre les lettres.

Bien entendu, les objets de grand format peuvent être insérés entre les lettres sans être préalablement triés ou en étant seulement prétriés.

Des objets non mécanisables peuvent être traités de la même manière que les objets de grand format pour être fusionnés avec des lettres triées en machine.

Selon un autre mode de réalisation particulier, la palette de maintien 10 ne subit pas de force de rappel mais peut être simplement encliquetée sur plusieurs positions espacées le long du rebord longitudinal 9 pour restreindre la longueur de la pile d'envois sur le chariot et empêcher ainsi l'affaissement des envois.

## Revendications

1. Chariot (1) à roulettes pour fusionner des lettres (20) et des objets de grand format, **caractérisé en ce qu'**il comporte un plateau supérieur (3) rectangulaire agencé sur un châssis (2) à roulettes (5) s'étendant selon une certaine direction longitudinale de manière à coulisser (32) transversalement à la direction longitudinale par rapport au châssis, le plateau supérieur comportant au moins une rallonge (6a,6b) agencée de manière à se déployer selon la direction longitudinale (7a,7b) dans le prolongement du plateau supérieur, deux rebords latéraux (8a,8b) à chacune des extrémités latérales du plateau supérieur faisant saillies sur le dessus du plateau supérieur et une palette (10) de maintien s'étendant parallèlement aux rebords latéraux agencée pour se déplacer selon la direction longitudinale sur le plateau supérieur.

2. Chariot à roulettes selon la revendication 1, dans lequel le plateau supérieur comporte deux rallonges (6a,6b) se déployant selon la direction longitudinale dans des directions opposées (7a,7b).

3. Chariot à roulettes selon l'une des revendications 1 et 2, dans lequel la palette de maintien (10) subit une force de rappel tendant à la déplacer selon la direction longitudinale en direction d'un des rebords latéraux (8a,8b).

4. Chariot à roulettes selon l'une des revendications précédentes, dans lequel le plateau supérieur comporte en outre un rebord longitudinal (9) faisant saillie sur le dessus du plateau supérieur.

5. Chariot à roulettes selon la revendication 4, dans lequel des poignées (12) sont agencées sur le rebord longitudinal.

6. Chariot à roulettes selon l'une des revendications précédentes, dans lequel le châssis à roulettes comprend en outre une poignée (13) au niveau de chaque extrémité latérale.

7. Procédé pour fusionner des lettres et des objets de grand format avec un chariot à roulettes selon l'une des revendications précédentes dans lequel on trie (30) les lettres dans des sorties de tri (21) d'une machine de tri (22) et on insère les objets de grand format entre les lettres, **caractérisé en ce qu'**il comprend les étapes consistant à :
- amener (31) le chariot roulant en face d'une sortie de tri de la machine,
- faire coulisser (32) le plateau supérieur du chariot contre la sortie de tri,
- faire glisser (33) les lettres contenues sur chant dans cette sortie de tri jusque sur le plateau supérieur,
- déplacer (34) le chariot le long des sorties de tri de la machine et vider (35) une à une toutes les sorties de tri sur le plateau supérieur,
- rétracter (37) le plateau supérieur sur le châssis du chariot roulant,
- amener (38) le chariot roulant jusqu'à un endroit approprié pour l'insertion des objets de grand format,
- insérer (41) les objets de grand format entre les lettres,
- écarter (43) les rallonges du plateau supérieur pour laisser suffisamment de place pour l'insertion des objets de grand format entre les lettres.

8. Procédé selon la revendication 7, dans lequel on fait glisser les lettres entre un rebord latéral et la palette de maintien pour les maintenir sur chant sur le plateau supérieur.

9. Procédé selon la revendication 8, dans lequel une pression de rappel est exercée en permanence par la palette de maintien sur les lettres.
